# EUROPEAN PATENT APPLICATION

(11) **EP 2 503 370 A1**
(43) Date of publication of application: **26.09.2012**
(21) Application number: 11003368.5
(22) Date of filing: 21.04.2011
(51) Int. Cl.: G02B 6/44

(54) **Indoor fiber optic distribution device and indoor fiber optic installation system**

(30) Priority: 25.03.2011 EP 11002501
(71) Applicant: CCS Technology Inc., Wilmington, DE 19803 (US)
(72) Inventor: Kiesheyer, Peter, 46047 Oberhausen (DE)
(74) Representative: Sturm, Christoph

(57) **Abstract**

An indoor fiber optic distribution device, comprising a housing (11) having a shell-like housing part (11) and a lid-like housing part (13) defining together an interior of said housing (11), whereby said housing (11) provides lead-in openings (15, 17, 19, 26) for fiber optic cables through which fiber optic cables can enter from the exterior of the housing into the interior of the same and vice versa can emerge from the interior of the housing into the exterior form the same; whereby said interior of said housing (11) receives at least one optical fiber handling component (21, 22) for handling at least one fiber optic connection point between optical fibers of the fiber optic cables and/or at least one optical fiber handling component (21) for handling excess lengths of the optical fibers of the fiber optic cables and/or at least one optical fiber handling component (23) for providing strain relief for the optical fibers of the fiber optic cables; whereby said housing (11) is made from a incombustible material; whereby the or each optical fiber handling component (21, 22, 23) being positioned in the interior of said housing (11) is made from a non incombustible material, and whereby the incombustible materials of the housing (11) is selected from a first category of materials, namely of inherently non flammable materials, and the at least one optical fiber handling component (21, 22, 23) is made from a second category or third category of materials, namely of flame inhibiting materials. which are inherently flammable but have flame inhibiting properties which are different materials from the first category of materials (Fig. 1)

## Description

The present patent application relates to an indoor fiber optic distribution device. Further on, the present patent application relates to an indoor fiber optic installation system.

When building data transmission networks from optical fibers, it is necessary to interconnect optical fibers and to store excess lengths of said optical fibers. The connection points and excess lengths must be handled in fiber optic distribution devices outside of buildings and inside of buildings.

Outside of buildings for so-called outdoor applications, connection points between optical fibers and excess lengths thereof, are typically accommodated in fiber optic distribution devices designed as cable sleeves or street cabinets. Inside of buildings for so-called indoor applications, connection points between optical fibers and excess lengths thereof, are typically accommodated in fiber optic distribution devices designed as distribution cabinets or distribution frames. Fiber optic distribution devices designed as wall boxes can be used both outside of buildings and inside of buildings.

Fiber optic fiber distribution devices designed as wall boxes are known from the product catalogue entitled "Accessories for fiber optic networks, Edition 1, pages 184 to 187, issue 2001, Corning Cable Systems GmbH & Co. KG". The wall boxes disclosed in this product catalogue comprise a housing and optical fiber handling components, specifically splice cassettes or patch panels or strain relief elements, positioned inside the housing for handling connection points and excess lengths of optical fibers.

The fiber optic distribution devices known from the prior art are, in particular, only conditionally suitable for so-called indoor FTTH (Fiber-To-The-Home) applications inside fire protected areas of a building. However, what is desired for indoor FTTH applications are fire protected fiber optic distribution devices for handling connection points between optical fibers and excess lengths thereof inside fire protected areas of a building.

Starting here from, the present application is based on the problem of providing a novel indoor fire protected fiber optic distribution device and a novel indoor fiber optic installation system for installing fiber optic cables in fire protected areas of a building. Against this background, the problem to be solved is to provide a novel indoor fiber optic distribution device and a novel indoor fiber optic installation system being suitable for handling fiber optic cables as well as connection points between optical fibers of such cables in fire protected areas of a building.

This problem is solved by an indoor fiber optic distribution device according to claim 1. The indoor fiber optic distribution device comprises a housing having a shell-like housing part and a lid-like housing part defining together an interior of said housing; whereby said housing provides lead-in openings for fiber optic cables through which fiber optic cables can enter from the exterior of the housing into the interior of the same and vice versa can emerge from the interior of the housing into the exterior form the same; whereby said interior of said housing receives at least one optical fiber handling component for handling at least one fiber optic connection point between optical fibers of the fiber optic cables and/or at least one optical fiber handling component for handling excess lengths of the optical fibers of the fiber optic cables and/or at least one optical fiber handling component for providing strain relief for the optical fibers of the fiber optic cables; whereby said housing is made from a incombustible material; whereby the or each optical fiber handling component being positioned in the interior of said housing is made from a non incombustible material; whereby the incombustible material of the housing is selected from a first category of materials, namely of inherently non flammable materials, and whereby the non incombustible material of the at least one optical fiber handling component is made from a second category or third category of materials, namely of flame inhibiting materials, which are inherently flammable but have flame inhibiting properties which are different materials from the first category of materials.

The novel indoor fiber optic distribution device is fully suitable for indoor FTTH applications inside fire protected areas of a building.

The second category of materials includes preferably a thermal/heat/flame barrier formed of polyimide, metal, and/or plastic. The third category of materials includes materials which have been chemically altered to include flame inhibiting agents being an active flame inhibiting agent such as an inorganic compound included as a flame inhibiting agent such as a metal oxide or metal hydroxide.

The novel indoor fiber optic installation system for installing fiber optic cables inside a building is defined in claim 6.

Preferred embodiments of the handling device are given in the dependent claims and the description below. Exemplary embodiments will be explained in more detail with reference to the drawing, in which:
- figure 1: a top view of an indoor fiber optic distribution device;
- figure 2: a first side view of the indoor fiber optic distribution device according to figure 1;
- figure 3: a second side view of the indoor fiber optic distribution device according to figure 1;
- figure 4: a top view of the shell-like housing part of the indoor fiber optic distribution device according to figure 1; and
- figure 5: a sectional top view of an indoor fiber optic installation system comprising on indoor fiber optic distribution device according to figures 1-4 and indoor cable conduits.

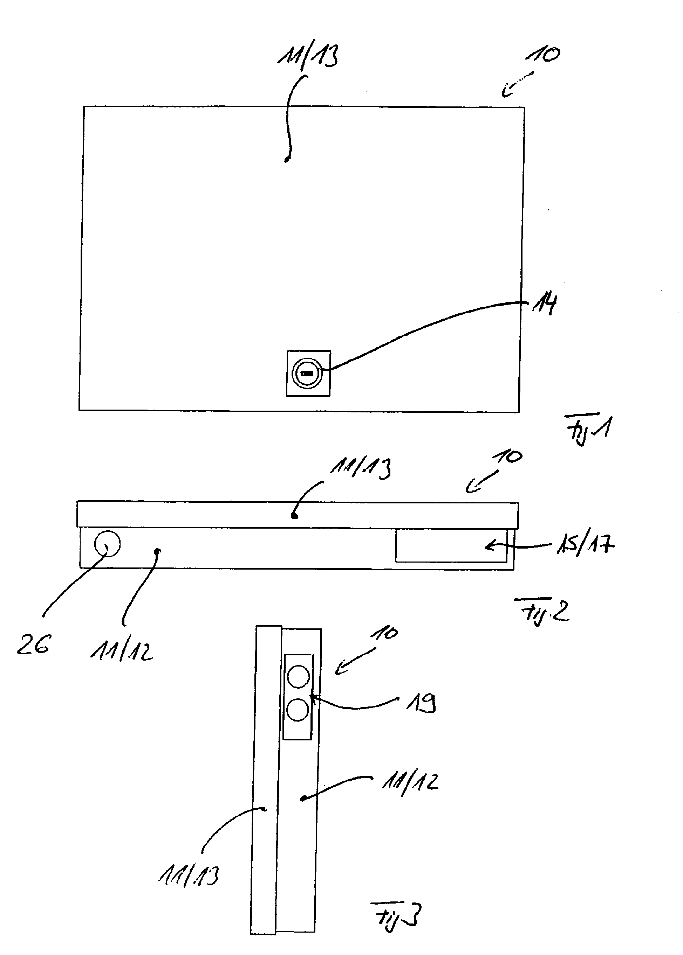

Figures 1 to 4 show different views of an indoor fiber optic distribution device 10. The fiber optic distribution device 10 comprises a housing 11 having a lower shell-like housing part 12 and an upper lid-like housing part 13 defining together an interior of said housing 11. A locking device 14 is assigned to the lid-like housing part 13 of the housing 11 of the fiber optic distribution device 10 protecting the same against unauthorized access.

The housing 11 of the fiber optic distribution device 10 provides lead-in openings for fiber optic cables through which fiber optic cables can enter from the exterior of the housing 11 into the interior of the same and through which vice versa fiber optic cables can emerge from the interior of the housing 11 into the exterior form the same.

A first lead-in opening 15 is assigned to a first side wall 16 of the shell-like housing part 12 of the housing 11 and a second opposite lead-in opening 17 is assigned to a second opposite side wall 18 of the shell-like housing part 12 of the housing 11. A third lead-in opening 19 is assigned to a third side wall 20 of the shell-like housing part 12 of the housing 11, whereby said third side wall 20 runs between to said first side wall 16 and said second side wall 18. These lead-in openings 15, 17 and 19 can by provided by break-out elements of the respective side wall 16, 18 and 20.

In addition to these lead-in openings 15, 17 and 19 the housing 11 of the fiber optic distribution device 10 have comprise additional lead-in openings for fiber optic cables, e.g. a lead lead-in opening 26 designed as a cable gland.

The interior of said housing 11 defined by the lower shell-like housing part 12 and the upper lid-like housing part 13 receives at least one optical fiber handling component. In the shown embodiment, the interior of said housing 11 receives a first optical fiber handling component 21 designed as a splice tray for handling at least one fiber optic connection point provided by a splice between optical fibers of fiber optic cables and for handling excess lengths of the optical fibers.

Further on, the interior of said housing 11 receives a second optical fiber handling component 22 designed as a patch panel for handling at least one fiber optic connection point provided by connectors and/or adapters between optical fibers of fiber optic cables.

In addition, the interior of said housing 11 receives third optical fiber handling components 23 designed as strain relief elements for providing strain relief to the optical fibers of the fiber optic cables.

The optical fiber handling components 21, 22, 23 are preferably mounted directly to the lower shell-like housing part 12 of the housing 11.

Said housing 11 of the fiber optic distribution device 10 is made from an incombustible material. The incombustible material of the housing 11 is selected from a first category of materials, namely of inherently non flammable materials. Said incombustible material or inherently non flammable material selected from the first category of materials can be a coated sheath metal coated e.g. with an intumescent coating or a plaster coating. Alternatively, said incombustible material or inherently non flammable material selected from the first category of materials can be a light weight concrete preferably with glass fiber reinforcement or carbon fiber reinforcement.

Materials used for the prevention, inhibition, and/or extinguishment of flame are put into three general categories. A first category of materials from which the housing 11 is made is mentioned above. These materials are incombustible and inherently non flammable.

A second category of materials is non incombustible but flame inhibiting and includes inherently flammable, flame-resistant materials which are thermally stable, and may have high decomposition temperatures, for example, certain metals or high temperature plastics.

A third category of materials used for the prevention, inhibition, and/or extinguishment of flame is also non incombustible but flame inhibiting and includes materials which have been chemically altered to include flame inhibiting agents.

More specifically, the materials included in the second category are useful as thermal/heat/flame barriers. Thermal/heat/flame barriers may have disadvantages, namely: they are generally expensive; and, because of limited burn-performance characteristics, they can be used in but a narrow range of applications.

The third general category of materials used for the prevention, inhibition, and/or extinguishment of flame includes inherently flammable materials which have been chemically altered to include flame inhibiting agents, which agents actively interfere with the chemical reactions associated with combustion.

Examples of inherently flammable materials are polyethylene, polypropylene, polystyrene, polyesters, polyurethanes, and epoxy resins. By comparison, thermal/heat/flame barriers typically do not include flame inhibiting agents, but rather are relied upon in flame protection designs for their resistance to decomposition at high temperatures, or their inherent heat dissipation or flame barrier properties.

In the second category, a metallic tape layer comprises a corrugated metal strip used as a thermal/heat/flame barrier. The tape is then wrapped around the components so that longitudinally extending edges of the tape are positioned in overlapping engagement on the housing 11/12 and at the cable entry locations 15, 17, 26. The metal layer may dissipate heat, and it is typically electrically grounded during installation. In addition, a non-metallic thermal/heat/flame barrier suitable flame resistant tape can be used. The flame resistant tape is made of a polyimide, e.g. a KAPTON or a TEFLON material.

A thermal/heat/flame barrier for blocking heat flow is used with the housing 11/13. A mechanically strengthened, thermal barrier layer can be used. The thermal barrier is to be placed on the inside of the cable conduit and the metallic tape layer on the outside so that the thermal barrier is preventing heat transfer to the outside (stairway area). The purpose is to avoid ignition of materials in the stairway area which would endanger the escape route. A metallic shield and a plastic layer can surround the thermal barrier layer. The thermal barrier layer comprises a temperature resistant tape which is made of a woven glass or aramid fibrous material. The thermal barrier layer is a laminate comprising a high temperature resistant tape.

The incombustible material of the housing 11 is selected from the first category materials. The at least one optical fiber handling component 21, 22 is made from the second category or third category of materials which is different from the first category of materials.

The optical fiber handling components 21, 22, 23 are made from a non incombustible or combustible or flammable material chosen from the second or third category of materials. The same are positioned with the incombustible housing 11 chosen from the first category of materials and can therefore me made from a lighter and cheaper material.

It may be desired to use materials whereby the optical fiber handling components 21, 22, 23 are made from or include the third general category of materials, as described above, used for the prevention, inhibition, and/or extinguishment of flame including inherently flammable materials which have been chemically altered to include flame inhibiting agents. In this case, the materials of the optical fiber handling components 21, 22, 23 include one or more flame inhibiting agents, for example, an active flame inhibiting agent is a polyolefin compound Megolon S300. This compound is a blend of co-polymers with an inorganic compound included as a flame inhibiting agent, namely, aluminum trihydrate, a metal hydroxide filler as a flame inhibiting agent can be used as well.

The housing 11 of the fiber optic distribution device 10 provides a cable guiding area 24 extending between the first lead-in opening 15 of the shell-like housing part 12 and the second lead-in opening 17 of the same, in which fiber optic cables can be guided straight through the interior of the housing 11. Flame resistant materials of the second and third categories set out above can be applied to the cable guiding area 24.

Further on, it is possible to direct fiber optic cables from said cable guiding area 24 of the housing 11 to an adjacent optical fiber handling area 25 of the housing 11 in which the or each optical fiber handling component 21, 22, 23 is positioned.

Said optical fiber handling area 25 of the housing 11 is positioned between the third side wall 20 and the cable guiding area 24 of the housing 11.

Said optical fiber handling area 25 can be made from, for example, the third general category of materials used for the prevention, inhibition, and/or extinguishment of flame including inherently flammable materials which have been chemically altered to include flame inhibiting agents, for example, as described above.

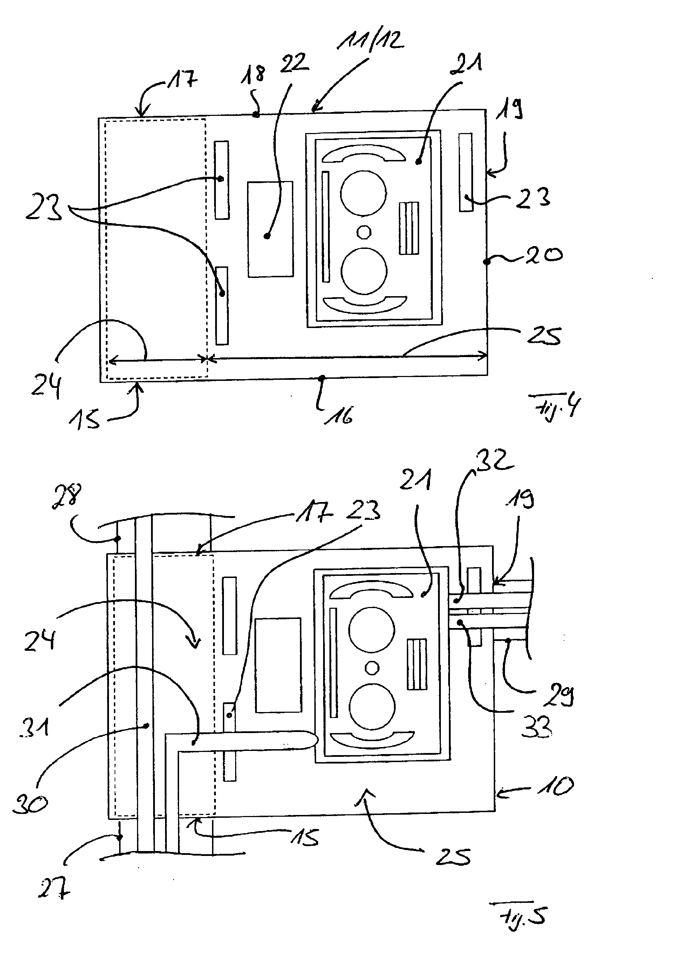

Figure 5 shows the fiber optic distribution device 10 of Figures 1-4 being part of an indoor fiber optic installation system for installing fiber optic cables inside fire protected areas of a building. Such an indoor fiber optic installation system comprises a plurality of fiber optic distribution device 10.

Figure 5 shows the fiber optic distribution device 10, made according to the foregoing description, together with indoor cable conduits for receiving and guiding fiber optic cables outside the housing 11. To each of the lead-in openings 15, 17 and 19 of the housing 11 of the shown fiber optic distribution device 10 there is assigned an individual indoor cable conduit 27, 28 and 29.

As shown in Figure 5, the indoor cable conduit 27 is assigned to the lead-in opening 15 of the side wall 16, the indoor cable conduit 18 is assigned to the lead-in opening 17 of the side wall 18 and the indoor cable conduit 29 is assigned to the lead-in opening 19 of the side wall 20.

The cable guiding area 24 provided by the housing 11 of the shown fiber optic distribution device 10 completes the indoor cable conduits 27, 28 assigned to the lead-in openings 15, 17 of the fiber optic distribution device 10 so that the cable guiding area 24 is an integral part of a cable channel provided by the cable guiding area 24 and the indoor cable conduits 27, 28 assigned to the first lead-in opening 15 and the second lead-in opening 17.

As shown in figure 5, a first fiber optic cable 30 is guided straight through the interior of the housing 11, namely through the cable guiding area 24 of the same thereby providing a direct connection between the indoor cable conduits 27,28.

A second fiber optic cable 31 entering into the interior of the housing 11 from the exterior of the same, namely from the cable conduit 27, through the lead-in opening 15 is guided from the cable guiding area 24 to the optical fiber handling area 25 of the housing 11, whereby strain relief is provided to said fiber optic cable 30 by one of said optical fiber handling components 23.

Optical fibers of said fiber optic cable 30 are spliced with optical fibers of fiber optic cables 32, 33 emerging from the interior of the housing 11 into the exterior of the same, namely to the cable conduit 29, through the lead-in opening 19. Splices of the optical fibers and excess lengths of the same are handled by the optical fiber handling component 21 being a splice tray.

The indoor cable conduits 27, 28 and 29 are made from the same incombustible / non flammable material like the housings 11 of the shown fiber optic distribution devices 10.

Said incombustible / non flammable material are chosen from the first category of materials and can be a coated sheath metal coated e.g. with an intumescent coating or a plaster coating. Alternatively, said incombustible material chosen from the first category of materials can be a light weight concrete preferably with glass fiber reinforcement or carbon fiber reinforcement.

The indoor fiber optic installation system is preferably used for providing fiber optic cabling inside fire protected areas of a multi dwelling building, whereby such a multi dwelling building has several floors and whereby each floor has several dwellings or apartments. In this case to each floor of the multi dwelling building there is assigned at least one fiber optic distribution device 10.

In this case, the cables 30, 31 are riser cables running vertically inside the building from the lower floor or the basement of the building to the upper floors of the same. In this case, the cables 32, 33 are drop cables running from the fiber optic distribution device 10 to the individual dwellings or apartments.

### List of reference numerals

- 10: indoor fiber optic distribution device
- 11: housing
- 12: shell-like housing part
- 13: lid-like housing part
- 14: locking device
- 15: lead-in opening
- 16: side wall
- 17: lead-in opening
- 18: side wall
- 19: lead-in opening
- 20: side wall
- 21: optical fiber handling component
- 22: optical fiber handling component
- 23: optical fiber handling component
- 24: cable guiding area
- 25: optical fiber handling area
- 26: lead-in opening
- 27: indoor cable conduit
- 28: indoor cable conduit
- 29: indoor cable conduit
- 30: fiber optic cable
- 31: fiber optic cable
- 32: fiber optic cable
- 33: fiber optic cable

## Claims

1. Indoor fiber optic distribution device, comprising a housing (11) having a shell-like housing part (11) and a lid-like housing part (13) defining together an interior of said housing (11), whereby
said housing (11) provides lead-in openings (15, 17, 19, 26) for fiber optic cables through which fiber optic cables can enter from the exterior of the housing into the interior of the same and vice versa can emerge from the interior of the housing into the exterior form the same;
said interior of said housing (11) receives at least one optical fiber handling component (21, 22) for handling at least one fiber optic connection point between optical fibers of the fiber optic cables and/or at least one optical fiber handling component (21) for handling excess lengths of the optical fibers of the fiber optic cables and/or at least one optical fiber handling component (23) for providing strain relief for the optical fibers of the fiber optic cables;
said housing (11) is made from an incombustible material; the or each optical fiber handling component (21, 22, 23) being positioned in the interior of said housing (11) is made from a non incombustible material;
the incombustible material of the housing (11) is selected from a first category of materials, namely of inherently non flammable materials, and
the non incombustible material of the at least one optical fiber handling component (21, 22) is made from a second category or third category of materials, namely of flame inhibiting materials, which are inherently flammable but have flame inhibiting properties which are different materials from the first category of materials.

2. Indoor fiber optic distribution device as claimed in claim 1, **characterised in that** a first lead-in opening (15) is assigned to a first side wall (16) of the housing (11) and a second opposite lead-in opening (17) is assigned to a second opposite side wall (18) of the housing (11), whereby the housing (11) provides a cable guiding area (24) extending between the first lead-in opening (15) of the housing and the second lead-in opening (17) of the same in which fiber optic cables can be guided straight through the interior of the housing (11) and/or from which fiber optic cables can be directed to an adjacent optical fiber handling area (25) of the housing in which the or each optical fiber handling component (21, 22, 23) is positioned.

3. Indoor fiber optic distribution device as claimed in claim 2, **characterised in that** a third lead-in opening (19) is assigned to a third side wall (20) of the housing (11), whereby said third side wall (20) runs between to said first side wall (15) and said second side wall (17), and whereby the optical fiber handling area (25) of the housing (11) is positioned between the third side wall (20) and the cable guiding area (24) of the housing (11).

4. Indoor fiber optic distribution device as claimed in any of claims 1-3, **characterised in that** the second category of materials includes a thermal/heat/flame barrier formed of polyimide, metal, and/or plastic.

5. Indoor fiber optic distribution device as claimed in any of claims 1-4, **characterised in that** the third category of materials includes a material which has been chemically altered to include flame inhibiting agents being an active flame inhibiting agent such as an inorganic compound included as a flame inhibiting agent such as a metal oxide or metal hydroxide.

6. Indoor fiber optic installation system for installing fiber optic cables inside fire protected areas of a building, comprising:
indoor cable conduits (27, 28, 29) for receiving and guiding fiber optic cables, whereby said indoor cable conduits (27, 28, 29) are made from an incombustible material;
indoor fiber optic distribution devices (10) according to any of claims 1-5.

7. Indoor fiber optic installation system as claimed in claim 6, **characterised in that** to each lead-in opening (15, 17, 19) of the respective fiber optic distribution device (10) there is assigned an individual indoor cable conduit (27, 28, 29) for receiving and guiding the fiber optic cables outside of the respective fiber optic distribution device (10).

8. Indoor fiber optic installation system as claimed in claim 7, **characterised in that** the cable guiding area (24) provided by the housing (11) of each fiber optic distribution device (10) completes the indoor cable conduits (27, 28) assigned to the first lead-in opening (15) and the second lead-in opening (17) of the respective fiber optic distribution device (10) so that the cable guiding area (24) is an integral part of a cable channel provided by the cable guiding area (24) and the indoor cable conduits (27, 28) assigned to the first lead-in opening (15) and the second lead-in opening (17).

9. Indoor fiber optic installation system as claimed in any of claims 6-8, **characterised in that** the indoor cable conduits (27, 28, 29) and the housings (11) of the fiber optic distribution devices (10) are made from the same incombustible material being selected from the first category of materials, namely of inherently non flammable materials.
